Europäisches Patentamt

(19) European Patent Office

Office européen des brevets

(11) Publication number: **0 186 359**
**A2**

(12) **EUROPEAN PATENT APPLICATION**

(21) Application number: **85308919.1**

(22) Date of filing: **09.12.85**

(51) Int. Cl.⁴: **G 11 B 23/033**
**G 11 B 23/023**

(30) Priority: **20.12.84 GB 8432146**

(43) Date of publication of application:
**02.07.86 Bulletin 86/27**

(84) Designated Contracting States:
**BE DE FR GB IT NL**

(71) Applicant: **Magill, William James Dermott**
**Highlands Cottage Spencers Wood**
**Reading Berkshire(GB)**

(72) Inventor: **Magill, William James Dermott**
**Highlands Cottage Spencers Wood**
**Reading Berkshire(GB)**

(74) Representative: **Singleton, Jeffrey et al,**
**ERIC POTTER & CLARKSON 27 South Street**
**Reading Berkshire, RG1 4QU(GB)**

(54) **Containers for software.**

㉗ A container for a floppy disc comprising two members
(1, 2) hingedly connected together, with one member (1)
being provided on its inside face with a compartment (5, 16,
15) for accommodating, and retaining entirely therewithin, at
least one floppy disc. The other member (2) may also have a
compartment on its inside face for one or more floppy discs,
or it may be provided with means (24) for holding one or
more cassettes of magnetic tape and/or one or more
diskettes.

Fig. 1

## CONTAINERS FOR SOFTWARE

This invention relates to containers for software
and more particularly to containers for accommodating and
protecting floppy discs which may or may not be
accompanied by one or more cassettes of magnetic tape and
by instructional literature.

The problem with known floppy disc holders is that
they do not protect the discs from externally or
internally applied forces which is very undesirable in
view of the extremely sensitive nature of floppy discs
regarding "creasing" or other physical blemishes which
can adversely affect the reading of information stored on
the discs. Furthermore, it has been found that floppy
discs are sensitive to sustained pressure such as is
occasioned, for example, when a number of discs are
stacked one upon the other or when a disc is in a stack
of other objects. One known container is in the form of
a simple folder on the inside of the front and/or back
cover of which is formed a pocket by heat sealing a piece
of synthetic plastics material across one edge and
partially along opposed sides adjoining that edge. These
pockets lie tight against the inside covers and hence the
floppy disc or other item to be received thereby is not
readily inserted and after repeated usage the pocket
tends to tear or break away from one or more of its
sealed edges. More importantly, the floppy discs are
subjected to external forces which may be applied to the
container during handling or storage, even when the
latter is stiffened, because the discs are held so
tightly against the inside cover or covers that in effect
they form part thereof and are sandwiched tightly between
the two covers.

In a variant of this known form of container, a
pocket is formed, as described, to hold a floppy disc on
the inside of one cover, with a vacuum moulded cassette holder being attached to the inside of the other cover with the facility, by way of a recess, to accommodate an instructional booklet or the like. With this arrangement, the booklet and/or cassette contacts one face of the floppy disc holder (usually a thin cardboard envelope) and can damage the floppy disc especially if any protrusions, such as securing staples, are present, or just by applying sustained pressure to the disc.

Another known container has a vacuum formed holder on the inside of one cover and an upstanding flange on the inside of the other cover which surrounds the holder when the container is closed, thus preventing the holder contents from falling out. The holder has a first recess for accommodating a tape cassette and a second recess overlying the first for holding a floppy disc, means being provided for retaining the floppy disc within the second recess although these are not always effective so that the disc can fall out when the container is opened. An instructional booklet or the like can be placed in the recess formed by the upstanding flange on the other cover and if so, the floppy disc is sandwiched between the booklet and the cassette which may result in damage to the disc as described above.

According to the present invention there is provided a container for a floppy disc comprising two hingedly connected members at least one of which is provided on its inside face with a compartment for accommodating, and retaining entirely therewithin, at least one floppy disc.

The or each disc is not held in close contact with the associated member of the container which minimises, if not avoids, any damage arising from externally applied forces during handling or storage of the container.

The or each compartment is preferably dimensioned so as to receive the or each disc as a snug fit. That is to say that the compartment is dimensioned so as to cradle the or each disc without allowing any undue free movement

-3-

thereof but also without subjecting it to any pressure. The compartment may be formed by two opposed pairs of first wall means extending from the inside face of the associated member and second wall means extending parallel to said inside face. The first wall means may be continuous or discontinuous and the second wall means may be likewise either spanning one pair of first wall means (if continuous), or extending from respective walls of said one pair of first wall means (if discontinuous). Preferably, a container in accordance with the present invention is injection moulded in a semi-rigid or rigid synthetic plastics material.

It is desirable to be able readily to release the or each disc from a compartment and to this end a preferred feature of the invention is the provision of ramp means associated with one wall of one pair of first walls, and a discontinuity in the opposed wall of that pair. With this arrangement, the ramp means serve as extensions of the associated wall to retain the or each disc in the compartment but when a disc is to be removed therefrom, it is pushed up the ramp means by engaging an edge through said discontinuity in the opposed wall, whereby the disc is readily presented for grasping to effect final withdrawal from the compartment.

A floppy disc compartment may be provided on the inside face of each of the two basic members of the container or alternatively one member may be provided with a holder for one or more magnetic tape cassettes. In either case, provision can be made for accommodating instructional literature or the like on one or both of the members.

Containers for floppy discs in accordance with the present invention will now be described in greater detail, by way of example, with reference to the accompanying drawings, in which:-

Figures 1 and 2 are perspective views of a first embodiment shown in the open position and closed position, respectively,

Figure 3 is a side view from the right-hand side of Figure 1,

Figure 4 is an end view of Figure 1, and

Figures 5 and 6 are perspective views of pen second and third embodiments, respectively.

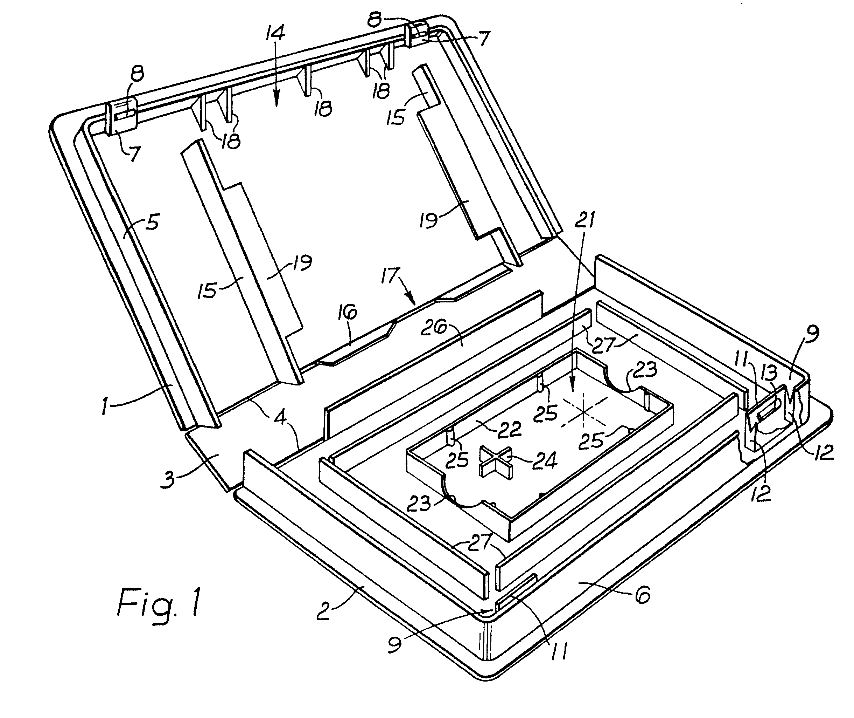

Referring first to Figures 1 to 4, the first embodiment is designed to hold a floppy magnectic disc on one side and a cassette of magnetic tape and an instructional booklet or the like on the other side. The container is of general book form and comprises two rectangular, planar members 1 and 2 hingedly connected together via a spine 3, the hinges being formed by respective integral strips 4 of material of smaller thickness than that of the members 1, 2 and the spine 3.

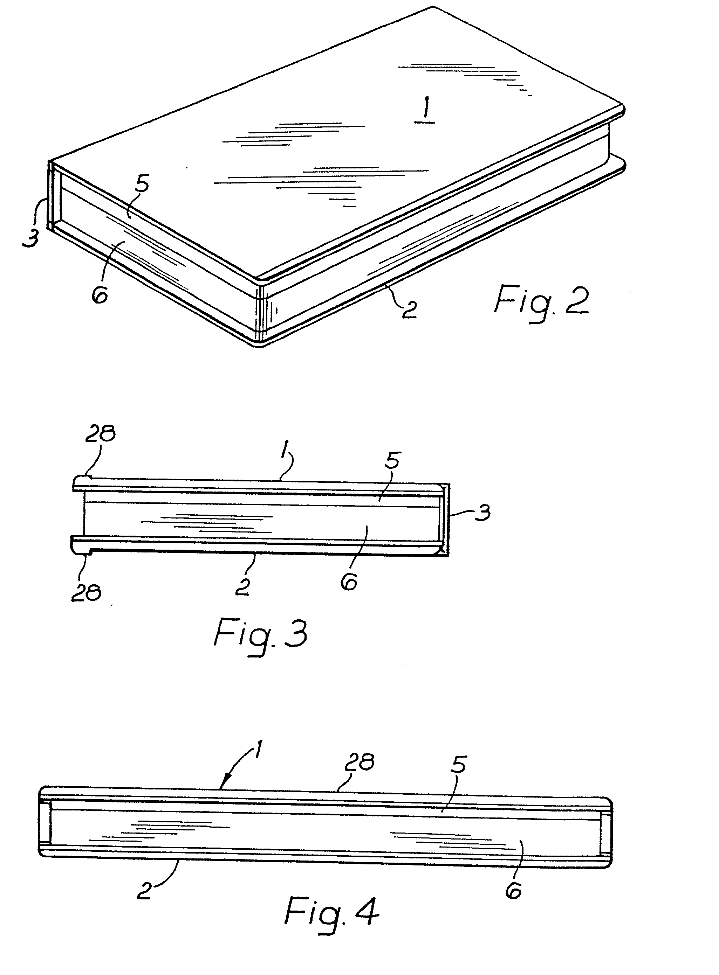

The members 1 and 2 each have on their inside face a respective upstanding flange 5, 6 extending around, but slightly inset from, the three free edges, the flanges being of differing heights but dimensioned such that the outer edges thereof abut each other when the container is closed as seen in Figures 2 to 4. Releasable closure means are provided in the form of a pair of spaced tongues 7 extending proud of and adjacent the flange 5 and provided with a rib 8 facing the spine 3, the tongues being engageable with respective pockets 9 provided adjacent the flange 6. Each pocket 9 is defined by part of the flange 6, an opposed lug 11 extending from the inner face of the member 2, and two sides 12 having V-shaped upper edges to allow flexing of the lugs 11. These components are illustrated in Figure 1 at the broken away portion of the flange 6. Each lug 11 is provided with a rib 13 facing inwardly of the pocket 9, the ribs 8 of the tongues 7 passing and snapping behind the respective ribs 13 when the container is closed and being disengaged as the container is opened.

The floppy disc holder provided on the inside of the member 1 is in the form of a compartment 14 which is defined by two opposed pair of first walls, the first pair comprising two upstanding members 15 extending from the adjacent edge of the spine 3 to a point short of the portion of the flange 5 opposite the spine, and the second pair comprising in effect part of that portion of the flange 5 and an upstanding member 16 extending along the associated edge of the spine 3 substantially between the walls 15. The wall 16 has a central discontinuity 17, and ramp means 18 in the form of a triangular fillets extend from the flange portion 5 towards the wall 16. The compartment 14 is completed by second wall means formed by two extensions 19 of the respective walls 15, the extensions being parallel to the inside face of the member 1 and defining therewith the depth of the compartment 14.

The compartment is dimensioned so as to receive a 5.25 inch (13.3 cm) disc (not shown) as a snug fit, as opposed to a tight fit, and it will be seen that a disc is accommodated entirely within the compartment whereby it is protected on all sides and edges. The disc can to some extent "float" within the compartment 14 which helps to avoid it being subjected to any forces during handling or storage of the container. The disc is retained in the compartment 14 however the open container might be oriented so that it cannot inadvertently fall out but is readily removed by engaging, through the discontinuity 17 in the wall 16, the edge adjacent the spine 3 and pushing it against the ramp means 18 up which the opposite edge rises so that the disc is presented for grasping and final removal from the compartment. The top of the ramp means 18 are shown flush with the top edge of the flange 5 but they may be made to extend slightly proud thereof to ensure that the disc clears the flange on removal.

As already mentioned, the other half of the container is designed to hold a cassette and a booklet or the like.

The cassette (not shown) is accommodated within a recess 21 defined by an upstanding rectangular flange 22 two opposed portions of which have arcuate cut-outs 23 to enable the cassette to be inserted and removed. Two cruciform members 24 (only one shown) are provided within the recess 21 to receive and locate the centres of the tape spools of the cassette in conventional fashion. Ribs 25 are provided on the inside face of the flange 22 to engage the sides of the cassette to ensure a friction fit so that the cassette too will not fall out inadvertently.

The booklet or the like (not shown) is accommodated over the cassette recess 22 within the confines of the flange 6 which is augmented on the fourth edge of the member 2 along the spine 3 by a short wall 26. In order to prevent the booklet flopping into the space between the flange 22 and the flange 6 and wall 26, four upstanding walls 27 are provided to support the booklet in this area.

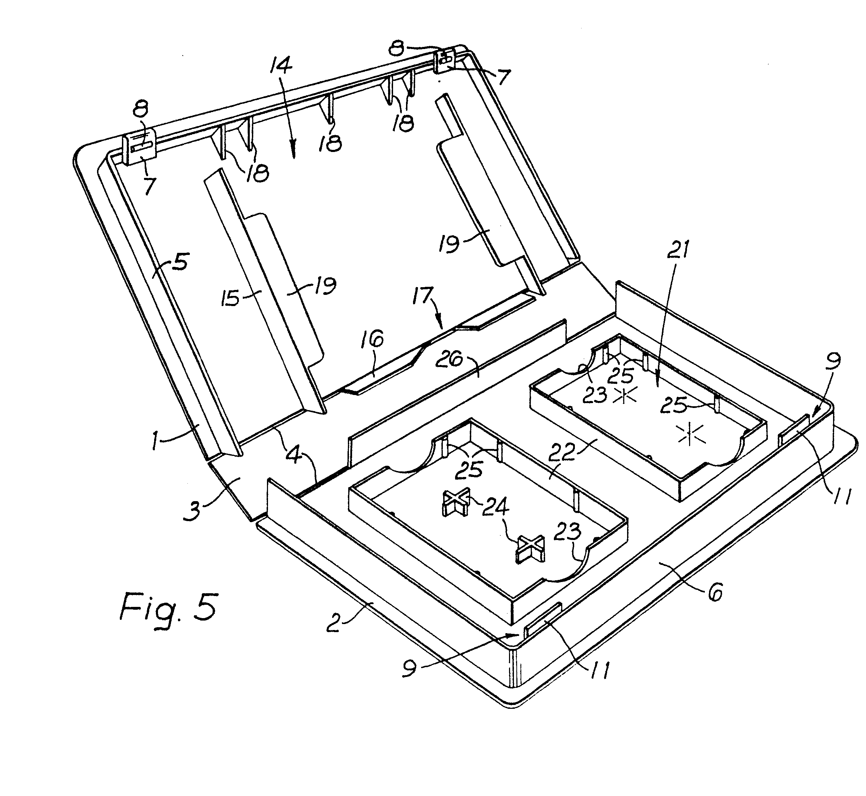

Turning now to the embodiment of Figure 5, this is identical to that of Figures 1 to 4 except for the fact that it is designed to hold two tape cassettes in the member 2 instead of one. Similar components have been given like reference numerals and it will be noted that the only difference between the two embodiments is that in Figure 4 the two cassette recesses formed by the respective flanges 22 have been turned through 90° and that the walls 27 have been dispensed with because the upper edges of the flanges 22 provide all the necessary support for the booklet or the like.

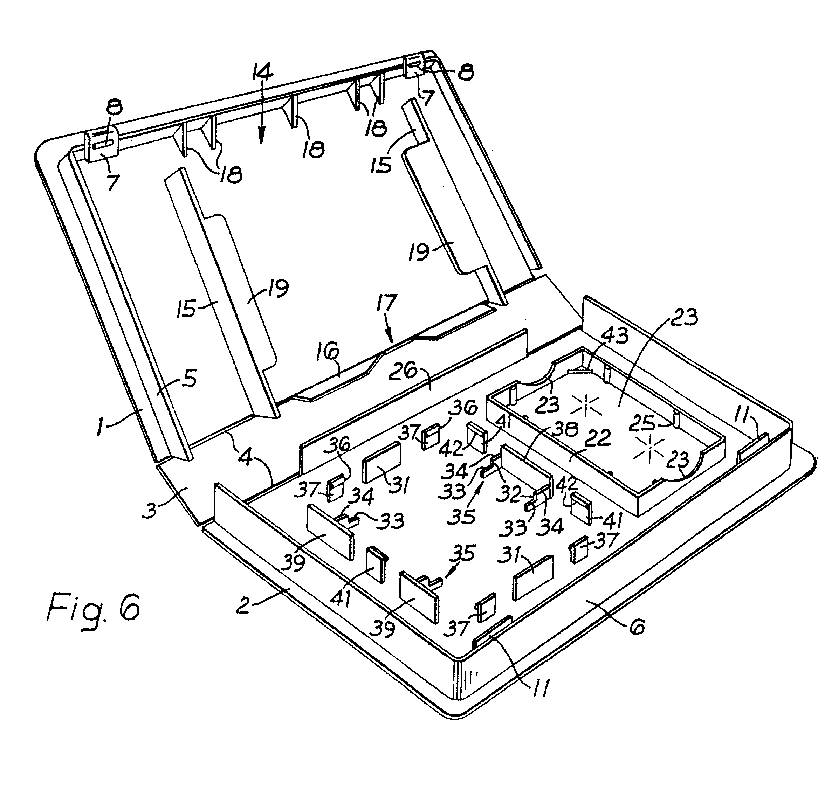

The third embodiment shown in Figure 6 is again identical in basic construction to that of Figure 1, the difference this time being that it is designed to hold in the member 2 one cassette and one 3 inch (7.6 cm) diskette and/or one 3.5 inch (8.9 cm) diskette. The smaller diskette (not shown) will normally be contained in a protective envelope or box (for example of a rigid or semi-rigid synthetic plastics material) measuring approximately 3 inches (7.6 cm) by 4 inches (10.2 cm) and this is a snug fit basically between two opposed short walls 31 and transitions 32 between steps 33 and 34 of four double-stepped member 35, two of which are associated with one side of the diskette and two with the opposed side. The smaller diskette sits on the first step 33 of each member 35, and is thus slightly spaced from the base of the member 2, and is positively retained in position by ribs 36 on two opposed pairs of upstanding members 37. This spacing of the smaller diskette from the base of the member 2 helps protect the diskette from any forces applied to the outside of the member 2 and enables a finger nail to be inserted beneath the diskette to help raise the latter for removal. The members 37 of each pair are disposed on opposite sides of a wall 31 and spaced therefrom, the members 37 being shorter than the walls 31. Although not discernible from the Figure 5, the members 37 are inclined slightly inwardly of the area for containing the diskettes so that they effectively spring load the ribs 36 and are forced outwardly by a diskette being inserted, whereby the adjacent edges snap under the ribs 36 and the diskette is held firm.

Two of the stepped members 35 extend at right angles from a single short wall 38 defining one side boundary for the larger diskette (also not shown), and the other two extend at right angles from separate short walls 39 which define the opposed boundary, these two walls being opposed to, but offset from, the single wall 38. On each side of the single wall 38 and inbetween the two walls 39 there is provided a member 41 having a rib 42 which serve the same purpose, relative to the large diskette, as the ribs 36 for the smaller diskette, the members 41 also being inclined inwardly of the area for retaining the larger diskette although again this is not seen from Figure 5. The larger diskette, which measures approximately 3.5 inches by 3.5 inches (8.9cm x 8.9cm), sits on the upper
step 34 of the stepped member 35 and is thus physically
separated from, and supported independently of, the
smaller diskette.  In order that the ribs 42 can snap over
the adjacent edges of the larger diskette, the members 41
are taller than the members 37 to accommodate the relative
positioning of the two diskettes.  The fact the larger
diameter diskette is in fact of smaller overall size than
the smaller diskette means that it does not span the walls
31 but it is held firmly by the ribs 42 and so does not
readily move about between the walls 31.

Another feature of the container of Figure 6 not
possessed by the containers of Figures 1 and 5 is that of
the bar 43 provided across the corner of the cassette
recess 21 at the base of the member 2, whereby the
cassette is supported slightly spaced from the latter.
However, this feature may be incorporated into the other
embodiments.  As before, an instruction booklet or the
like can be accommodated on top of the cassette and the
diskettes.

All of the illustrated embodiments of the invention
have been designed for production by injection moulding
from a rigid or semi-rigid synthetic plastics material to
give structural strength but in any event the
accommodation of the floppy disc within its own
compartment ensures protection of the latter.  In the
illustrated embodiments, the compartments 14 are designed
to hold one floppy disc but the depth of
the compartments 14 could be increased to hold two or
more.  If a number of containers are stacked one upon the
other or if one or more containers are stacked with other
objects the discs housed in the compartments are not
subjected to harmful sustained pressure principally
because the abutting flanges 5 and 6 and the wall 26 of
each container provide a rigid peripheral support thus
protecting all of the contents of the container.  Even if localised pressure is exerted on one of the members 1, 2, this will not impart (unless excessive) any pressure on the disc in the compartment, whereby the container affords first class protection for its contents and yet is simple to use.

The container would normally carry identifying material on the outside and to this end, two slightly raised ridges 28 (Figure 4) are provided along the edges of the outer faces of the members 1 and 2 opposite the spine 3 which provide surfaces for heat sealing or otherwise securing respective opposed edges of a thin rectangular film of a transparent synthetic plastics material (not shown) which overlies the whole of the exterior of the container, with the other opposed edges of the film being free for the insertion of a sheet of identifying material. The ridges 28 prevent the sheet from being gripped so tightly between the film and the members 1 and 2 that it is difficult, if not impossible, to insert and position the sheet properly.

It will be appreciated that a container in accordance with the present invention can be made from any material (if not injection moulded) and that it can be designed to hold floppy discs on one or both of the cover members if cassettes or diskettes do not have to be accommodated.

Claims

1.   A container for a floppy disc comprising two hingedly connected members, (1, 2), characterised in that at least one of the members (1) is provided on its inside face with a compartment (5, 16, 15) for accommodating, and retaining entirely therewithin, at least one floppy disc.

2.   A container according to claim 1, characterised in that the compartment comprises two opposed pairs of first wall means (5, 16; 15) extending from the inside face of said one member (1), and second wall means (19) extending parallel to said inside face.

3.   A container according to claim 2, characterised in that ramp means (18) are provided in association with one wall (5) of one pair of first wall means, and in that a discontinuity (17) is provided in the opposed wall (16) of that pair, whereby the ramp means serve as extensions of the associated wall to retain the or each disc in the compartment and serve to facilitate removal of a disc from the compartment as they raise the disc clear of the associated wall when the disc is pushed using the discontinuity in the opposed wall.

4.   A container according to any of the preceding claims, characterised in that a floppy disc compartment is provided on the inside face of each members (1, 2).

5.   A container according to any of claims 1 to 3, characterised in that one member (2) is provided on its inside face with means (24) for holding at least one magnetic tape cassette.

6.   A container according to any of the preceding claims characterised in that one member (2) is provided on its inside face with means (31, 37, 39, 41) for holding at least one diskette.

7.   A container according to claim 6, characterised in that each diskette is retained in position in said means by means (36; 38) releasably engageable with the edges of the diskette.

-11-

8. A container according to claim 7, characterised in that the releasable means are in the form of ribs (36; 38) provided on wall means (37; 39) which at least partially define the means for holding the diskette and which spring load the ribs.

9. A container according to any of claims 6 to 8, characterised in that the means (31, 37, 39, 41) are adapted to hold two diskettes one above the other with each diskette being supported independently of the other.

10. A container according to claim 9, characterised in that the diskettes are supported on respective steps (33, 34) on stepped members (39) disposed on opposed sides of the diskettes, with the transitions (32) between the steps serving at least partially to define opposed walls of the means for holding one of the diskettes.

Fig. 1

0186359

Fig. 2

Fig. 3

Fig. 4

Fig. 5

0186359

Fig. 6

0186359